(19) 

Europäisches
Patentamt

European
Patent Office

Office européen
des brevets

(11) **EP 3 926 553 A1**

(12) **EUROPEAN PATENT APPLICATION**

(43) Date of publication:
**22.12.2021 Bulletin 2021/51**

(21) Application number: **20181134.6**

(22) Date of filing: **19.06.2020**

(51) Int Cl.:
*G06N 20/00* *(2019.01)*  *G06F 21/14* *(2013.01)*
*G06N 3/02* *(2006.01)*  *G06N 5/00* *(2006.01)*
*G06N 7/00* *(2006.01)*  *G06N 20/10* *(2019.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Büttner, Florian
  81541 München (DE)**
• **Gruber, Sebastian
  84034 Landshut (DE)**

(54) **POST-PROCESSING OUTPUT DATA OF A CLASSIFIER**

(57) The invention is directed to a computer-implemented method for post-processing output data of a classifier, comprising the steps:
a. Providing a validation data set with a plurality of labelled sample pairs, wherein each labelled sample pair comprises a model input and a corresponding model output (S1) ;
b. Providing a plurality of perturbation levels (S2);
c. Generating at least one perturbated sample pair for each labelled sample pair of the plurality of labelled sample pairs using a perturbation method based on the respective labelled sample pair and at least one perturbation level of the plurality of perturbation levels (S3);
d. Determining a post-processing model based on the plurality of perturbated sample pairs (S4);
e. Applying the determined post-processing model on testing data to post-process the output data of the classifier (S5); and
f. Providing the post-processed output data of the classifier (S6). Further, the invention relates to a corresponding technical unit and computer program product.

FIG 1

EP 3 926 553 A1

**Description**

1. Technical field

The present invention relates to a computer-implemented method for post-processing output data of a classifier. Further, the invention relates to a corresponding technical unit and a computer program product.

2. Prior art

Artificial intelligence ("AI") systems for decision making in dynamically changing environments are known from the prior art. Such AI systems require not only a high predictive power, but also uncertainty awareness. A meaningful and trustworthy predictive uncertainty is particularly important for real-world applications where the distribution of input samples can drift away from the training distribution. Continuously monitoring model performance and reliability under such domain drift scenarios can be facilitated by well calibrated confidence scores - that is, if model accuracy decreases due shifts in the input distribution, confidence scores change in a coordinated fashion, reflecting the true correctness likelihood of a prediction.

Previous attempts to obtain well-calibrated estimates of predictive uncertainties have focused on training intrinsically uncertainty-aware probabilistic neural networks or post-processing unnormalized logits to achieve in-domain calibration. However, the known approaches cannot provide consistently well-calibrated predictions under dataset shifts.

It is therefore an objective of the invention to provide a computer-implemented method for post-processing output data of a classifier in an efficient and reliable manner.

3. Summary of the invention

This problem is solved by a computer-implemented method for post-processing output data of a classifier, comprising the steps:

    a. Providing a validation data set with a plurality of labelled sample pairs, wherein each labelled sample pair comprises a model input and a corresponding model output;

    b. Providing a plurality of perturbation levels;

    c. Generating at least one perturbated sample pair for each labelled sample pair of the plurality of labelled sample pairs using a perturbation method based on the respective labelled sample pair and at least one perturbation level of the plurality of perturbation levels;

    d. Determining a post-processing model based on the plurality of perturbated sample pairs;

    e. Applying the determined post-processing model on testing data to post-process the output data of the classifier; and

    f. Providing the post-processed output data of the classifier.

Accordingly, the invention is directed to a method for post-processing output data of a classifier in the context of machine learning. In other words, the method is directed to a post-processing algorithm. Preferably, the output logits of the classifier are post-processed.

Thereby, the classifier is a trained machine learning model, in particular AI ("Artificial Intelligence") model. Exemplary classifiers are listed further below, including neural networks.

In the first steps a. to b., the input data sets are provided or received as input for step c., namely the validation data set and the perturbation levels.

The validation data set comprises a set of labelled sample pairs, also referred to as samples. Thereby, the validation set comes from the same distribution as the training set. In context of machine learning, each sample is a pair. The pair comprises an input object, in particular a vector or matrix, and a desired output value or label (also called the supervisory signal). According to this, the model input can be equally referred to as input object and the model output can be equally referred to as output value or label.

The perturbation levels can be interpreted as perturbation strength. Thereby, a perturbation level quantifies how far away from the training distribution a perturbed sample is. The perturbation levels are preferably chosen to span the entire spectrum of domain shift, from in-domain to truly out-of-domain (OOD; for OOD samples a model has random accuracy). The perturbation levels can be denoted as values Epsilon e.g. between 0 and 1. The perturbation levels can be randomly sampled or selected via alternative methods.

The input data sets can be received via one or more interfaces and/or can be stored in a storage unit for data storage and data transmission from the storage unit to a computing unit with respective interfaces for data transmission. The transmission includes receiving and sending data in two directions.

Next, in step c., the perturbation method is applied on the received input data sets resulting in perturbated sample pairs. In other words, perturbated sample pairs of varying perturbation strength are generated using in particular the Fast Gradient Signed Method (FGSM) based on the validation data set.

In the next steps d. to f., the post-processing of the output data of the classifier is performed. The post-processing can be parametric or non-parametric. Accordingly, a monotonic function can be used to transform the unnormalized logits of the classifier into post-processed logits of the classifier, such as piecewise temperature scaling.

In more detail, a post-processing model is determined based on the plurality of perturbated sample pairs. In other words, the post-processing model is trained. Thereby, optimizers can be applied, including optimizers and other calibration metrics, such as Nelder Mead, log likelihood, Brier score and ECE

Then, the determined post-processing model is applied on testing data to post-process the output data of the classifier. This step of applying the post-processing model can be repeated, in particular whenever a new classification is made, throughout the life-cycle of the model. In other words, the trained post-processing model can be applied any time a prediction is made. Hence, once the post-processing model is trained, no more perturbed sample pairs are needed.

In the last step, the post-processed output data of the classifier is provided.

The advantage of the method according to the invention is that the trained classifiers can be post-processed in an efficient and reliable manner without the need of retraining.

Another advantage is that the method has no negative effect on the accuracy. The method ensures that the classifier is well calibrated not only for in-domain predictions but yields well calibrated predictions also under domain drift.

In one aspect the classifier is a trained machine learning model selected from the group comprising: SVM, xgboost, random forest and neural network. Accordingly, the classifier or trained machine learning model can be selected in a flexible manner according to the specific application case, underlying technical system and user requirements.

In another aspect the perturbation method is a noise function selected from the group comprising: Fast gradient sign method (FGSM) and Gaussian function. The FGSM has proven to be particular advantageous due to the fact that not only the direction, but also the strength of the domain drift that may occur after model deployment remains unknown, the adversarials can be generated at a variety of noise levels covering the entire spectrum from in-domain to truly out-of domain.

A further aspect of the invention is a technical unit for performing the aforementioned method.

The technical unit may be realized as any device, or any means, for computing, in particular for executing a software, an app, or an algorithm. For example, the unit may comprise a central processing unit (CPU) and a memory operatively connected to the CPU.

The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the unit may be implemented by a cloud computing platform.

A further aspect of the invention is a computer program product directly loadable into an internal memory of a computer, comprising software code portions for performing the steps according to the aforementioned method when said computer program product is running on a computer.

4. Short description of the drawings

In the following detailed description, presently preferred embodiments of the invention are further described with reference to the following figures:

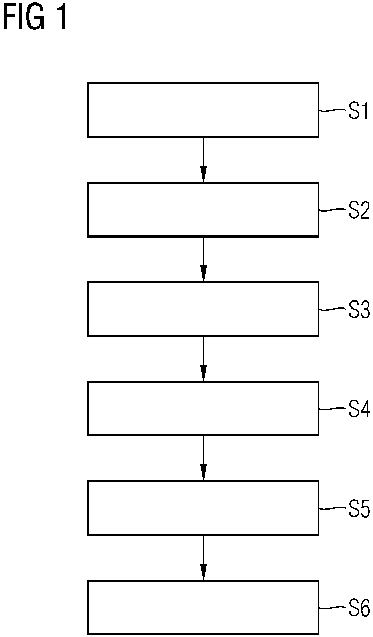

Fig. 1    illustrates a flowchart of the method according to the invention.

5. Detailed description of preferred embodiments

Fig. 1 illustrates a flowchart of the method according to the invention. The method is directed to a post-processing approach for classifiers, such as deep neural networks and gradient boosted decision trees (xgboost) that ensures that output scores are well calibrated in the case of any gradual domain shift, covering the entire spectrum from in-domain to truly out-of-domain samples.

The method can be split into three distinct stages, as listed in the following:

Stage 1:    Generating perturbed samples according to method steps S1 to S3

Stage 2: Fitting the post-processing model using e.g. Nelder Mead to determine parameters in generalized Temp scaling according to method step S4

Stage 3: Apply postprocessing model to outputs of classifier according to method step S5.

Stage 1 and 2 are performed once only. Stage 3 can be performed repeatedly.

Generation of the perturbated sample pairs S1 - S3

A set of samples are generated which cover the entire spectrum from in-domain samples to truly out-of-domain samples in a continuous and representative manner. According to this, the fast gradient sign method (FGSM) is used on the basis of the validation data set with sample pairs to generate perturbated samples pairs S3, with varying perturbation strength. More specifically, for each sample pair in the validation data set, the derivative of the loss is determined with respect to each input dimension and the sign of this gradient is recorded. If the gradient cannot be determined analytically (e.g. for decision trees), it can be resorted to a 0th -order approximation and the gradient can be determined using finite differences. Then, noise $epsilon$ is added to each input dimension in the direction of its gradient. For each sample pair, a noise level can be selected at random, such that the adversarial validation set comprises representative samples from the entire spectrum of domain drift, as shown in the pseudo code of algorithm 1 and explanation.

```
    \begin{algorithm} [H]
        \caption{PORTAL with trained neural network $f (x) $, a
    set of perturbation levels $\mathcal{E}=\{
    0.001,0.002,0.004,0.008,0.016,0.032,0.064,0.128,0.256,0.512\}
    $ , complexity parameter $\zeta=1$, validation set $(X, Y)$,
    and empty perturbed validation set
    $(X_\mathcal{E},Y_\mathcal{E}, Z_\mathcal {E},
    Z^r_\mathcal {E})$.
        }\label{alg1}
        \begin{algorithmic} [1]
        \For{ (x, y) in (X,Y) }
            \For{$\epsilon\; \mathrm{in}\;\mathcal{E}$}
                \State Generate adversarial sample $x_\epsilon$
                using $\epsilon_\zeta=\epsilon/\zeta$
                \State Use neural network $f (x_\epsilon)$ to
    compute unnormalized logits $\bm{z_\epsilon}$ and logit range
    $z-\epsilon^r$
                \State Add $(x_\epsilon, y, \bm{z_\epsilon},
    z_\epsilon^r)$ to $(X_\mathcal{E},Y_\mathcal{E},
    Z_\mathcal{E}, Z^r_\mathcal{E})$
             \EndFor
         \EndFor
            \State Initialize $\bm{\theta}$
            \State Optimize $\bm{\theta}$ using Nelder-Mead
            optimizer for log-likelihood of perturbed validation set
    $\mathcal{L}(\bm{\theta}) = - \sum_{i=1}^{N_\mathcal{E}} y_i
    \log \hat{Q}_i(\bm{\theta}) = - \sum_{i=1}^{N_\mathcal{E}}
    y_i \log \sigma_{SM}(\mathbf{z}_i/T(z^r_i;\bm{\theta}))$
        \end{algorithmic}
    \end{algorithm}
```

**Algorithm 1** Generation of adversarial validation set $V_{adv}$ based on validation $V$, consisting of a collection of labelled samples {$(x,y)$}, with $x$ being model inputs an $y$ model outputs. $N$ denotes the number of samples in $V$, $\varepsilon$ = {$0,0.05,0.1,0.15,0.2,.025,0.3,0.35,0.4,0.45$} the set of perturbation levels.

```
Require: Validation set V and empty adversarial set V_adv
1: for i in 1:N do
2:    Read sample pair (x_i, y_i) from V
3:    Randomly sample ε_i from E
4:    Generate adversarial sample pair (x_adv, y) using the FGSM
method based on ε_i
5:    Add (x_adv, y) to V_adv
6: end for
x_adv denotes an adversarial input generated from x using the
FGSM method.
```

According to an alternative embodiment, the formulation of Algorithm 1 differs in that not only one adversarial sample is generated per sample pair; but instead FGSM is applied for all available epsilons. Thereby the size of the adversarial validation set can be significantly increased by the size of the set of epsilons. In other words, different perturbation strategies can be used e.g. based on image perturbation. The advantage is that the method according to the invention can be applied on black box models where it is not possible to compute the gradient.

Generation of the post-processed logits S4 - S6

The third stage covers the Generation of the post-processed model. According to this, a strictly monotonic parameterized function is used to transform the unnormalized logits of the classifier. For example, Platt scaling, temperature scaling, other parameterizations of a monotonic function, or non-parametric alternatives can be used. In an embodiment according to the following equation a novel parameterization is used, which adds additional flexibility to known functions by introducing range-adaptive temperature scaling. While in classical temperature scaling a single temperature is used to transform logits across the entire spectrum of outputs, a range-specific temperature is used for different value ranges.
The following is a formula of a preferred embodiment:

$$T(z^r; \boldsymbol{\theta}) = \exp\_id \left( \frac{\theta_1}{(z^r + \theta_2)^{\theta_3}} + \theta_0 \right) \tag{5}$$

with $\theta = [\theta_0, ... \theta_3]$ parameterizing the temperature $T(z^r; \theta)$ and $z_r = \max(z) - \min(z)$ being the range of an unnormalized logits tuple $\mathbf{z}$. $\theta_0$ can be interpreted as an asymptotic dependency on $z^r$. The following function an be used $\exp\_id : x \to \{x + 1, x > 0; \exp(x), \text{else}\}$ to ensure a positive output. This parameterized temperature is then used to obtain calibrated confidence scores $\hat{Q}_i$ for sample $i$ based on unnormalized logits:

$$\hat{Q}_i = \max_c \sigma_{SM}(z_i / T(z_i^r; \boldsymbol{\theta}))^{(c)} \tag{6}$$

$$\int c,T : \mathbb{R} \rightarrow \mathbb{R}$$

$$\int c,T : x \rightarrow \begin{cases} \frac{x}{|T_1|} \\ \frac{x-C_{h-1}}{|Th|} + \sum_{l=1}^{h-1} \frac{C_l - C_{l-1}}{|Tl|} \end{cases}$$

$$if \ x < C_1$$
$$if \ C_{h-1} \le x < C_h, \qquad h = 2, ..., H$$

$$with \ H := dim \ (T)$$
$$c_0 := 0,$$
$$c_H := \infty$$

Sigma_SM denotes the softmax function. The parameters of the function (theta) are then determined by optimizing a calibration metric based on the adversarial validation set. Calibration metrics can be the log likelihood, the Brier score or the expected calibration error, see also Algorithm 2.

**Algorithm 2** Fit parameterized post-processing model $\mathbf{u} = f(\mathbf{z}, T)$, where $f$ is a strictly monotonic function parameterized by parameters $T$ and maps the unnormalized logits $\mathbf{z} = C(x)$ of a classifier $C$ to transformed (still unnormalized) logits $\mathbf{u}$. Let $g$ denote a calibration metric that is used to compute a scalar calibration measure $w$ based on a set of logits along with ground truth labels.

**Require:** Adversarial set $V_{adv}$ (from algorithm 1), function $f$ with initial parameters $T$, calibration metric $g$.

```
1: repeat
2:    Read sample pairs {(x_adv, y)} from V_adv. Let Y be the set of
all labels.
3:    Compute  post-processed  logits  u = f(z,T)  for  all  z =
C(x_adv), comprising set U.
4:    Perform  optimization  step  and  update  T  to  optimize
g(U,Y)
5: until Optimisation converged
6: return Optimized T
```

In an alternative embodiment of a blackbox classifier where logits are not available, Algorithm 2 can be adapted such that unnormalized logits are generated by computing z = log(C(x)). Optimizers can be advantageously be selected according to the form of the metric (e.g. Nelder Mead for piecewise temperature scaling) in a flexible manner.

Reference signs

S1 to S6 Method steps 1 to 6

**Claims**

1. Computer-implemented method for post-processing output data of a classifier, comprising the steps:

   a. Providing a validation data set with a plurality of labelled sample pairs, wherein each labelled sample pair comprises a model input and a corresponding model output (S1);
   b. Providing a plurality of perturbation levels (S2);
   c. Generating at least one perturbated sample pair for each labelled sample pair of the plurality of labelled sample pairs using a perturbation method based on the respective labelled sample pair and at least one perturbation level of the plurality of perturbation levels (S3);

d. Determining a post-processing model based on the plurality of perturbated sample pairs (S4);

e. Applying the determined post-processing model on testing data to post-process the output data of the classifier (S5); and

f. Providing the post-processed output data of the classifier (S6).

2. Computer-implemented method according to claim 1, wherein the classifier is a trained machine learning model selected from the group comprising: SVM, xgboost, random forest and neural network.

3. Computer-implemented method according to claim 1 or claim 2, wherein the perturbation method is a noise function selected from the group comprising: Fast gradient sign method (FGSM) and Gaussian function.

4. A technical unit for performing the method steps according to any of the preceding claims.

5. A computer program product directly loadable into an internal memory of a computer, comprising software code portions for performing the steps according to any one the claims 1-3 when said computer program product is running on a computer.

FIG 1

Europäisches
Patentamt

European
Patent Office

Office européen
des brevets

# EUROPEAN SEARCH REPORT

Application Number

EP 20 18 1134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/244103 A1 (WANG LUYU [CA] ET AL) 8 August 2019 (2019-08-08) * abstract * * paragraph [0011] - paragraph [0022] * * paragraph [0069] * * paragraph [0110] - paragraph [0133] * * paragraph [0143] - paragraph [0145] * * Tables 1-8 * * figures 3B, 3D * ----- | 1-5 | INV. G06N20/00 ADD. G06F21/14 G06N3/02 G06N5/00 G06N7/00 G06N20/10 |
| X | US 2019/130110 A1 (LEE TAESUNG [US] ET AL) 2 May 2019 (2019-05-02) * abstract * * paragraph [0058] - paragraph [0068] * * paragraph [0141] - paragraph [0142] * * figures 3A-3C, 7 * ----- | 1-5 | |

TECHNICAL FIELDS
SEARCHED (IPC)

G06N
G06F

The present search report has been drawn up for all claims

| Place of search | Date of completion of the search | Examiner |
|---|---|---|
| The Hague | 9 December 2020 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 18 1134

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2020

| Patent document cited in search report | | Publication date | Patent family member(s) | | Publication date |
|---|---|---|---|---|---|
| US 2019244103 | A1 | 08-08-2019 | CA | 3033014 A1 | 07-08-2019 |
| | | | US | 2019244103 A1 | 08-08-2019 |
| US 2019130110 | A1 | 02-05-2019 | CN | 111295674 A | 16-06-2020 |
| | | | DE | 112018004376 T5 | 14-05-2020 |
| | | | GB | 2580579 A | 22-07-2020 |
| | | | US | 2019130110 A1 | 02-05-2019 |
| | | | WO | 2019087033 A1 | 09-05-2019 |

EPO FORM P0459

For more details about this annex : see Official Journal of the European Patent Office, No. 12/82